# EUROPEAN PATENT SPECIFICATION

(11) **EP 4 165 860 B1**
(45) Date of publication and mention of the grant of the patent: **03.12.2025**
(21) Application number: 21749286.7
(22) Date of filing: 07.06.2021
(51) Int. Cl.: H04M 1/72436, G06F 40/58, G06F 40/263, G06F 40/279

(54) **METHOD FOR INPUTTING A MESSAGE ON A TERMINAL IN A PRIMARY LANGUAGE AND TRANSLATING PASSAGES FROM A SECOND LANGUAGE**
VERFAHREN ZUR EINGABE EINER NACHRICHT AUF EINEM TERMINAL IN EINER PRIMÄRSPRACHE UND ÜBERSETZUNG VON PASSAGEN AUS EINER ZWEITEN SPRACHE
MÉTHODE POUR CRÉER UN MESSAGE SUR UN TERMINAL DANS UNE LANGUE PRIMAIRE ET TRADUIRE DES PASSAGES D'UNE DEUXIÈME LANGUE

(30) Priority: 10.06.2020 WO PCT/CN2020/095456
(43) Date of publication of application: 19.04.2023
(73) Proprietor: Orange, 92130 Issy-les-Moulineaux (FR)
(72) Inventor: YE, Nan, Beijing 100013 (CN); SUO, Meng, Beijing 10013 (CN); WAN, Jie, Beijing 100013 (CN)
(74) Representative: Regimbeau
(86) International application number: PCT/IB2021/000406
(87) International publication number: WO 2021/250469

(56) References cited:
- EP-A1- 2 487 889
- WO-A1-2019/191546
- WO-A2-2014/022306
- US-A1- 2004 102 201
- US-A1- 2018 276 202

## Description

### FIELD OF THE INVENTION

The field of this invention is that of user interfaces of terminals. More particularly, the invention relates to a method for inputting a message on a terminal.

### BACKGROUND OF THE INVENTION

Various user terminals and especially mobile phones (smartphones) are massively used for exchanging text messages using various messaging applications such as SMS, an e-mails client, WhatsApp, etc., in various languages.

However, when users are using a foreign language in a message, they still need sometimes the help of a separate, dedicated translation application.

In more details, the user has to:
1) Stop writing the text message in the messaging application and open the translation application;
2) Input the words or sentences to be translated into the translation application;
3) Get the result in the translation application and paste this result back into the messaging application.

This burdensome procedure may happen again and again, especially when users write something new which they are not quite familiar with, requiring to switch repeatedly between the two applications.

In order to improve the situation when inputting some text in a messaging application, one may use an advanced virtual input keyboard, such as Gboard from Google, which embeds a translator for translating the inputted text into a translated text inserted in the messaging application.

Indeed, mobile terminals such as smartphones are generally no more provided with a physical keyboard. Instead, they present a large touchscreen (covering most of the front surface), and use as an on-screen input method a software component called the "virtual keyboard".

Such an advanced virtual input keyboard presents a dedicated input area. For using it, the user must first select the "target language" into which the inputted text is to be translated. Then, when the user starts writing in another language using the virtual keyboard, this advanced virtual input keyboard detects the language of the inputted text, set it as a "source language" and proceed with the translation of the inputted words from this "source language" to the "target language".

However, such a known solution is not really user-friendly, because it still relies on different applications (messaging application + virtual keyboard application), so that the user must input their text into the dedicated input area of the advanced virtual keyboard while they read the translated result outputted in the messaging application. In other words, the inputted text is far apart from the displayed translated text, which is not very convenient for the user as their eyes must go back and forth the input zone and the text display zone, and reduces the space available on the screen.

In addition, with such a solution, the user is still required to select beforehand the "target language" (into which the inputted text should be translated in the text message), which is prone to error by the user and inconvenient when the user frequently switches language between messages, or even in the same message.

Finally, this solution is limited to terminals with virtual keyboards and cannot be used with a physical keyboard.

Some more advanced proposals have been published.

For instance, document US2004/0102201 teaches a proposal wherein source and target languages are selected by the user or, automatically based on identifiers of both parties.

It can not be used for a user willing to shift from one language to another in a same message.

WO 2014/022306 teaches a dynamic determination of a change in the language, but the starting point is a default language, which is not convenient in case the user intends to write in a particular language.

WO 2019/191546 teaches an automatic detection of the source langage, but this determination is the predominant language of the message to translate, which is not convenient in case the user intends to write in a particular language.

There is therefore a need to address these issues and propose a fully automatic (i.e. not based on the user's selection) and universal (i.e. which can be used with every terminal and every messaging application) input method which provides translation without a burdensome procedure, for carrying out efficiently a messenger conversation, with the best user experience, in particular providing the user with the choice of the target language.

### SUMMARY OF THE INVENTION

For these purposes, the present invention provides a method for inputting a message on a terminal, the method comprising the following steps, performed by a processing unit of the terminal and/or a processing unit of a remote server hosted by a network (20) connected to the terminal through a communication unit of said terminal, wherein said message in inputted at a user interface of said terminal:
- identifying a primary language for said message;
- detecting the input of a part of said message in a secondary language, different from the primary language; and
- translating into the primary language said part inputted in the secondary language,
- replacing (d), in said message, the part inputted in the secondary message by its translated part into the primary message,
- characterized in that it further comprises identifying (a) a primary language for said message comprises:
   - detecting the input of an initial part of the message, inputted in said message before said part inputted in the secondary language,
   - analyzing said initial part in order to determine its language, using a stored Machine-Learning (ML) model, and
   - setting the determined language of said initial part as the primary language for said message.

Preferred but non limiting features of the present invention are as follow:
- at least one of said neighboring wireless electronic device is a neighboring wireless access point;
- detecting the input of the part of the message in the secondary language, different from the primary language, comprises analyzing said part inputted in the secondary language and detecting a change of language;
- said initial part in the primary language and said part in the second language comprise at least one clause, the method comprising detecting delimiting punctuations between said clauses and analyzing independently said clauses;
- analyzing a clause comprises analyzing at least one of the first words of this clause until the language of said clause is identified;
- identifying the primary language and/or the secondary language comprises analyzing at least one contextual parameter of the message;
- said at least one contextual parameter is a parameter among a virtual keyboard layout selected by a user, a previous message, information about the recipient of the message and language preferences;
- replacing, in said message, the part inputted in the secondary language by its translated part into the primary language is automatically performed after translating into the primary language said part inputted in the secondary language;
- the method further comprises:
   - outputting the part translated into the primary language along with the part inputted in the second language, and
   - said replacing, being made upon validation on the terminal;
- the steps of translating said part into the primary language and outputting the part translated into the primary language along with the part inputted in the second language are dynamically updated while said part is being inputted in the second language.

According to a second aspect, the invention proposes a mobile terminal comprising a processing unit configured to:
- identify a primary language for a message to be inputted at a user interface (13) of the terminal;
- detect the input of a part of said message in a secondary language, different from the primary language; and
- translate into the primary language said part of the message inputted in a secondary language, replacing (d), in said message, the part inputted in the secondary message by its translated part into the primary message,
- characterized in that the processing unit (11) is further configured to:
   - detect the input of an initial part of the message, inputted in said message before said part inputted in the secondary language,
   - analyze said initial part in order to determine its language, using a stored Machine-Learning (ML) model, and
   - set the determined language of said initial part as the primary language for said message.
   - analyzing said initial part in order to determine its language, using a stored Machine-Learning (ML) model, and
   - setting the determined language of said initial part as the primary language for said message.

According to a third and a fourth aspect, the invention proposes a computer program product comprising code instructions for executing a method according to the first aspect for inputting a message on a terminal; and a computer-readable medium, on which is stored a computer program product comprising code instructions for executing a method according to the first aspect for inputting a message on a terminal.

### BRIEF DESCRIPTION OF THE DRAWINGS

The above and other objects, features and advantages of this invention will be apparent in the following detailed description of an illustrative embodiment thereof, which is to be read in connection with the accompanying drawings wherein:
- figure 1 illustrates an example of architecture in which the method according to the invention is performed;
- figure 2 illustrates an embodiment of a method for inputting a message on a terminal according to the present invention; and
- figure 3 illustrates an exemplary interface using the method in accordance with an embodiment of the present invention.

### DETAILED DESCRIPTION OF A PREFERRED EMBODIMENT

### Architecture

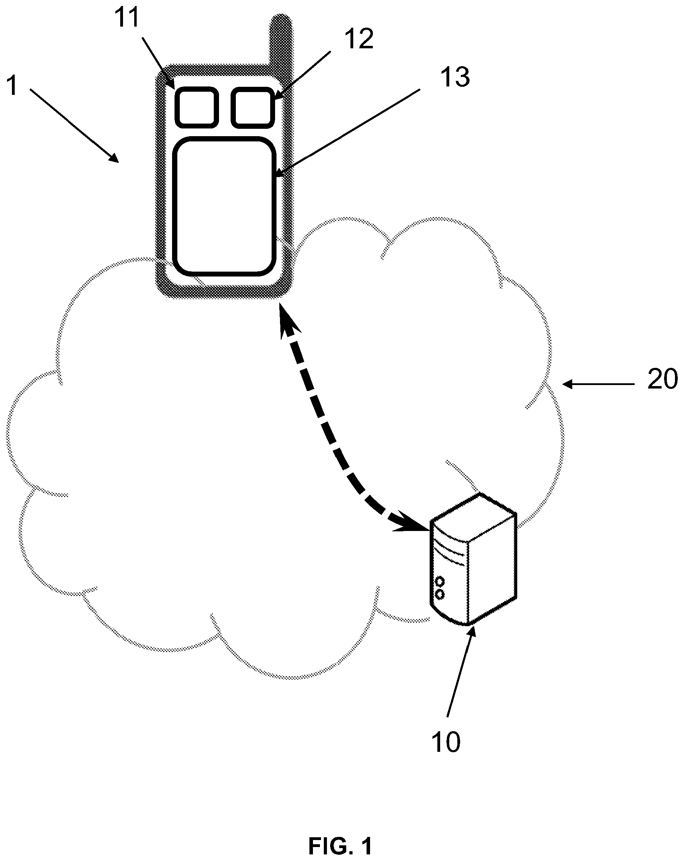

The present invention relates to a method for inputting a message on terminal 1 as represented by **figure 1****.**

The terminal 1 can be any device comprising a processing unit 11, i.e. a CPU (one or more processors), a memory 12 (for example flash memory), and a user interface 13 for input (for instance a keyboard, preferably a touch sensitive screen with at least one virtual keyboard). The memory 12 is in particular for storing applications, which can be of various types, and data.

The terminal 1 is typically a smartphone, a tablet computer, a laptop, etc. In the following description, the example of a smartphone will be used.

The terminal 1 may further comprise other units such as a battery, a communication unit for connecting (in particular wirelessly) the terminal 1 to a network 20 (for example WiFi, Bluetooth, and preferably a mobile network, in particular a GSM/UMTS/LTE network, see below), etc.

### Primary language

The present method is performed by the processing unit 11 of the terminal 1, and is implemented either by a messaging application of the terminal (a SMS client, an e-mail client, chat application, Whatsapp, etc.), a dedicated software application, or even by the operating system of the terminal 1 itself.

Preferably, the method can be implemented by a software code encapsulated into a plugin, for being integrated into any messaging application. This way, the present method is independent of the input means relied upon, contrary to the previously discussed prior art.

A messaging application allows typing a message using the user interface 13, in particular through a virtual keyboard, i.e. a "soft keyboard" as explained, or any physical keyboard or even through voice recognition.

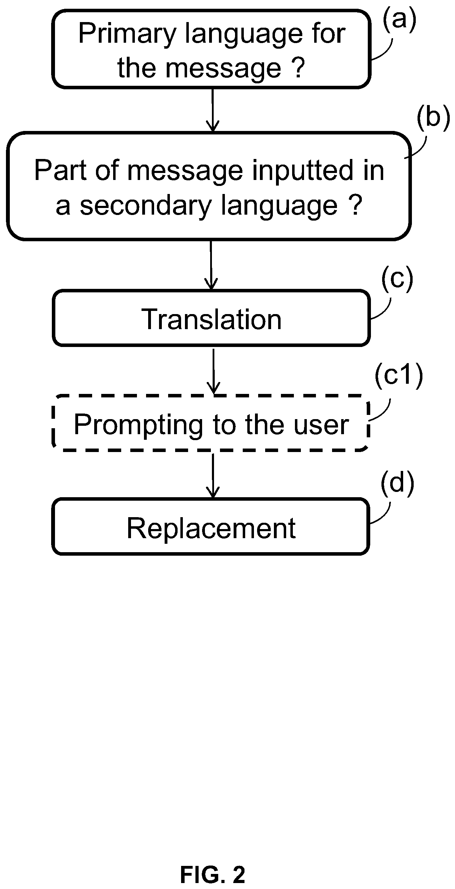

With reference to **figure 2****,** in a first step (a), a primary language for the message to be inputted on the terminal is identified. By "primary language", it is meant the language in which the message is intended to be written, similar to the "target language" of the prior art translators.

According to a first embodiment of step (a), when a user starts inputting a message on the terminal, step (a) is performed after a few words have been written, i.e. for a message which is being inputted on the terminal. In other words, step (a) comprises detecting the input of an "initial" part of the message (which may be the first sentence of the message, or even just a few words of this first sentence), and said primary language is identified by analyzing said initial part.

Any known technology for detecting a language can be used in such an embodiment: for instance, for each word inputted, a language identification may be automatically attempted, until a confidence score threshold is reached.

To this end, a Machine-Learning (ML) model which returns to the messaging application a list of languages along with respective confidence parameters on a scale from 0.0 to 1.0 may be used, this ML model being possibly hosted in the network 20 by a server 10, or by the terminal 1 itself if it has sufficient capacities.

The messaging application provides the first words of the message to the ML model until a language is returned with a confidence parameter higher than a confidence threshold, for instance 0.8 when the maximum is 1.0 (i.e. 80 % confidence that this is the correct language). At this stage, the messaging application sets this language as the primary language for the message being typed, i.e. the language into which the message is to be sent.

This primary language, identified from the initial part of the message, may be set as the sole primary language for the entire text message, i.e. the unique language into which any inputted words in another language should be translated during the entry of the whole text message. In other words, the determination of the target language is performed on a message-per-message basis. In such a case, the initial part of the message is to be understood as being made of the first words of the inputted message, so that there is only one initial part for the whole message.

Alternatively, the identification of the primary language may be performed on a paragraph-per-paragraph basis, so that the final text to be sent can have paragraphs in different languages. In such a case, once the start of a new paragraph is detected (for instance by detecting a "\n", "\r" or "\t" character indicating a new line), step (a) is performed again based on a new "initial" part (the first words of this new paragraph are provided to the ML model in order to determine the primary language for this paragraph, etc.). In such a case, the initial part of the message is to be understood as being made of the first words of a new paragraph of the message, so that there may be several initial parts for the same message (one for each new paragraph).

According to a second embodiment of step (a), the primary language may be identified for a message to be inputted on the terminal. In that case, the identifying step (a) may be performed while the message is being inputted (i.e. after starting inputting this message) as in the first embodiment, or even before that the message is being inputted.

In other words, the primary language is not identified solely by analyzing the message itself, but may also take into account contextual parameters, possibly (but necessarily) in combination with an initial part analysis as above, such as:
- a virtual keyboard layout selected by the user (a QWERTY-based layout is associated to English, a AZERTY-based layout is associated to French, a Chinese layout is associated to Chinese, etc.)
- a previous message (for instance when the instant message is a reply to said previous message: it may be assumed that the same language as that of the previous message will be used as primary language);
- information about the recipient of the message (usual language for communicating with this recipient, address, name, etc.)
- language preference of the application or of the terminal operating system.

Note that both embodiments can be combined based on available parameters: a candidate primary language may be initially identified based on contextual parameters, and then confirmed or not when an initial part has been inputted.

For instance:
- the user opens the e-mail application and selects "reply to" a previous message in Chinese → the language of the previous message (Chinese) is identified and set as candidate primary language;
- then, the user adds further recipients which are known to be English speakers → the candidate primary language is switched to English;
- the user starts typing in English → the primary language is confirmed as English.

### Secondary language

In a second step (b), the processing module 11 of the terminal 1 detects the input of a part of the message in a secondary language different from the primary language. When an "initial part" has been analyzed to identify the primary language, such a part can be designated as a "further part", to be understood with respect to this "initial part" which has been inputted before this "further part" in the message, but it is possible that the primary language has been identified without analyzing any word that has been typed, so that this part in a secondary language may also extend to the part from the very beginning of the message. Preferably, this part is at least a clause of a sentence, or even at least one whole sentence (and not one or two isolated words) for avoiding false identifications.

For the sake of illustrating the invention, let us assume that, at some stage, the user is blocked as (s)he does not know how to translate something.

For example, let us assume here that the user is Chinese, but wishes to write in English to a few friends as explained above. The user starts writing a few words in English, and in step (a) the identified language is English, set as a primary language, based on the first words typed in the message. Then, let us assume that the Chinese user does not how to express "I have checked all the possible solutions, but it still doesn't work" in English.

Instead of jumping out of the messaging application to look for a translation or trigger a virtual keyboard with an embedded translator as previously proposed, in the present invention the user just writes the sentence in Chinese, after the first English words typed so far. In our example, the user directly writes " 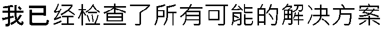 · 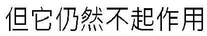 ∘". In other words, this further part is inputted in the messaging application itself and not in a distinct page/application or a dedicated field of a virtual keyboard: the user has simply to switch languages while continuing inputting, no other action is required.

The messaging application automatically identifies the language of the last sentence, here Chinese, determines that this language is different from the primary language, and set this detected language as the secondary language.

Note that steps (a) and (b) and not necessarily distinct. The user may simply continuously input words, and the processing unit 11 just detects, at some point, the transition from the primary language to a secondary language.

As an example, when, at each inputted word, an identification is automatically attempted, the processing unit 11 detects, after a first reaching of the confidence score threshold (the primary language is identified), a drop in the confidence score, then a second reaching of the confidence score this time with respect to another language (the secondary language is identified).

The above-mentioned ML models are preferably used accordingly in order to detect if there is a change of language in the inputted words. The ML model continues to return a list of languages along with respective confidence parameters on a scale from 0.0 to 1.0. When another language than the primary language is returned with a confidence parameter higher than the confidence threshold, for instance .8 when the maximum is 1.0 (i.e. 80 % confidence that this is the correct language), the use of another language is detected and this other language is identified as the secondary language of the message being typed (Chinese in the previously discussed example).

In an embodiment of step (b), all the inputted words are systematically analyzed (provided to the ML model), in order to have a constant evaluation of the language of the words being inputted by the user and detect any possible change of language.

In another embodiment, which alleviates the need for ML model, each part of the message is made of at least a clause, so that once a few words of the initial part have made it possible to determine the language, the processing unit 11 may then stop analyzing the next words : one assumes here that the rest of the clause or sentence will belong to the same language. In this embodiment, the messaging application will then detect delimiting punctuations (such as ",", ".", "!", "?", "...", "~" and new-lines characters, such "\r", "\n" etc.) which triggers analyzing again newly inputted words in order to determine again the language which is used.

For example, when typing the text "My name is YE Nan, 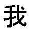 30 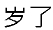 ":
- The first word "My" is enough to identify English as the primary language, and there is no need to analyze "name" or "is".
- The punctuation "," is detected and the words after this punctuation " 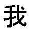 30 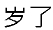 " will be considered as a further part so that a new identification of language is triggered, and Chinese is identified as the secondary language.

As an alternative to this implementation based on word analysis (in particular using the ML model), again contextual parameters may be used for identifying a secondary language different from the primary language, in particular the virtual keyboard layout chosen by the user.

Indeed, when the user switches from a first to a second virtual keyboard layout (in our example from a QWERY-based layout to a Chinese layout) in order to input some words, the language associated with this second keyboard layout is identified as the secondary language.

Note that step (b) still requires detecting the input of a part, i.e. at least one word. In other words, simply changing the virtual keyboard layout does not necessarily trigger the identification of a secondary language as the user might revert to the first keyboard layout without inputting a word (if for instance the change of layout is a mistake).

### Translation

In a next step (c), the (further) part inputted in the secondary language is translated into the primary language.

In other words, once the secondary language is identified, the processing unit 11 translates the words inputted in this secondary language into the primary language (in the above example, from Chinese to English) and provides it back. Said translation may be done using any known technique, in particular providing the part to be translated to a remote server 10 hosted in the network 20.

At this stage, the method comprises a further step of replacing (d), in said message, the part inputted in the secondary language by the translated part in the primary language. In other words, the "originally inputted" part (in the secondary language) is replaced by its "translated" part (in the primary language) obtained in step (c).

In a first embodiment, said replacement is automatic, i.e. the translation into the primary language can directly replace the part inputted in the secondary language, without any user's intervention. In other words the message is updated in real time. Note that it may be waited for the user to input a complete clause or sentence (by detecting delimiting punctuations as explained) before performing steps (c) and/or (d), in order to avoid multiple inaccurate replacements while the user keeps inputting words. Alternatively, the processing unit 11 may wait for the user to pause typing, and when a pause long enough is detected (for instance during two seconds), steps (c) and (d) are performed and the whole part in the secondary language is replaced by its translation.

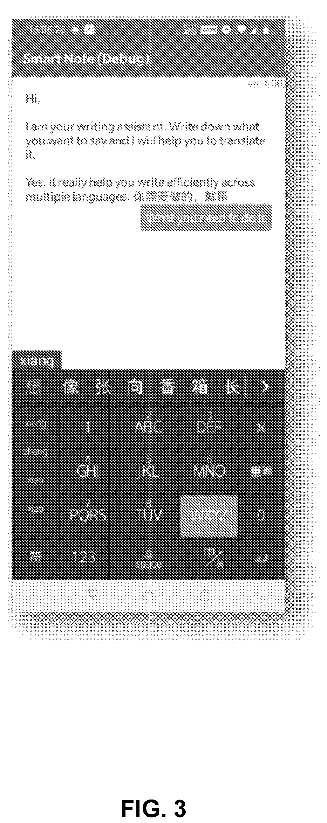

In another embodiment, the translation in the primary language can be outputted along with the part inputted in the secondary language in a step (c1) before any replacement, in particular prompted in a floating tip near the currently inputted text, as illustrated by **figure 3**. In other words, the replacement is not automatic but performed upon validation on the terminal, instructed by a user. If the user is satisfied with this translation, an action can trigger the replacement (for instance clicking on the floating tip). If the user is not satisfied, he can simply revise the part inputted in the secondary language and, in a new occurrence of step (c), the translation will synchronize with the latest updates.

Note that like in the previous embodiment, it may be waited for the user to input a complete clause or sentence before performing steps (c) and/or (d). Alternatively, step (c) can be repeated at each time a new word is inputted so as to dynamically update the submitted translation. The user knows when the part in the secondary language is over and simply triggers the replacement of step (d).

### Terminal and computer program

The present invention concerns mobile terminal 1 comprising a processing unit 11. This terminal 1 may also comprise a memory 12, a user interface 13.

The aforementioned processing unit 11 is in particular configured to implement, preferably when being requested the input of a message (via a messaging application), the steps of:
- identify (a) a primary language for the message to be inputted on the terminal 1 (on the user interface 13);
- detect (b) the input of a part of said message in a secondary language different from the primary language; and
- translate (c) into the primary language said part of the message inputted in a secondary language;
- advantageously replace (d), in said message, the part inputted in the secondary language by its translated part into the primary language.

The invention further proposes a computer program product, comprising code instructions for executing (in particular with a processing unit 11 of the terminal 1) the previously described method, as well as a computer-readable medium (in particular a memory 12 of the terminal 1), on which is stored a computer program product comprising code instructions for executing said method. In particular, this computer program product may correspond to the possibly dedicated software application discussed previously, and/or a messaging application.

## Claims

1. A method for inputting a message on a terminal (1), the method comprising the following steps, performed by a processing unit (11) of the terminal (1) and/or a processing unit of a remote server (10) hosted by a network (20) connected to the terminal (1) through a communication unit of said terminal, wherein said message in inputted at a user interface (13) of said terminal (1):
- identifying (a) a primary language for said message;
- detecting (b) the input of a part of said message in a secondary language, different from the primary language; and
- translating (c) into the primary language said part inputted in the secondary language,
- replacing (d), in said message, the part inputted in the secondary message by its translated part into the primary message,
**characterized in that** identifying (a) a primary language for said message further comprises:
- detecting the input of an initial part of the message, inputted in said message before said part inputted in the secondary language,
- analyzing said initial part in order to determine its language, using a stored Machine-Learning "ML" model, and
- setting the determined language of said initial part as the primary language for said message.

2. A method according to claim 1, wherein detecting (b) the input of the part of the message in the secondary language, different from the primary language, comprises analyzing said part inputted in the secondary language and detecting a change of language.

3. A method according to claim 2, wherein said initial part in the primary language and said part in the second language comprise at least one clause, the method comprising detecting delimiting punctuations between said clauses and analyzing independently said clauses.

4. A method according to claim 3, wherein analyzing a clause comprises analyzing at least one of the first words of this clause until the language of said clause is identified.

5. A method according to any one of claims 1 to 4, wherein identifying the primary language and/or the secondary language comprises analyzing at least one contextual parameter of the message.

6. A method according to claim 5, wherein said at least one contextual parameter is a parameter among a virtual keyboard layout selected by a user, a previous message, information about the recipient of the message and language preferences.

7. A method according to any of claims 1 to 6, wherein replacing (d), in said message, the part inputted in the secondary language by its translated part into the primary language is automatically performed after translating (c) into the primary language said part inputted in the secondary language.

8. A method according to any one of claims 1 to 6, further comprising:
- outputting (c1) the part translated into the primary language along with the part inputted in the second language, and
- said replacing (d) being made upon validation on the terminal (1).

9. A method according to claim 8 wherein the steps of translating (c) said part into the primary language and outputting (c1) the part translated into the primary language along with the part inputted in the second language are dynamically updated while said part is being inputted in the second language.

10. A mobile terminal (1) comprising a processing unit (11) configured to:
- identify (a) a primary language for a message to be inputted at a user interface (13) of the terminal (1);
- detect (b) the input of a part of said message in a secondary language, different from the primary language; and
- translate (c) into the primary language said part of the message inputted in a secondary language,
- replacing (d), in said message, the part inputted in the secondary language by its translated part into the primary language,
**characterized in that** the processing unit (11) is further configured to:
- detect the input of an initial part of the message, inputted in said message before said part inputted in the secondary language,
- analyze said initial part in order to determine its language, using a stored Machine-Learning "ML" model, and
- set the determined language of said initial part as the primary language for said message.

11. A computer program product, comprising code instructions for executing a method according to any one of claims 1 to 9 for inputting a message on a terminal (1), when executed by a processing unit.

12. A computer-readable medium, on which is stored a computer program product comprising code instructions for executing a method according to any one of claims 1 to 9 for inputting a message on a terminal (1).

## Patentansprüche

1. Verfahren zum Eingeben einer Nachricht auf einem Endgerät (1), wobei das Verfahren die folgenden Schritte umfasst, die durch eine Verarbeitungseinheit (11) des Endgeräts (1) und/oder eine Verarbeitungseinheit eines entfernten Servers (10) durchgeführt werden, der durch ein Netzwerk (20) gehostet wird, das über eine Kommunikationseinheit des Endgeräts mit dem Endgerät (1) verbunden ist, wobei die Nachricht an einer Benutzerschnittstelle (13) des Endgeräts (1) eingegeben wird:
- Identifizieren (a) einer Primärsprache für die Nachricht;
- Detektieren (b) der Eingabe eines Teils der Nachricht in einer Sekundärsprache, die sich von der Primärsprache unterscheidet; und
- Übersetzen (c) des in der Sekundärsprache eingegebenen Teils in die Primärsprache;
- Ersetzen (d), in der Nachricht, des in die Sekundärnachricht eingegebenen Teils durch seinen übersetzten Teil in die Primärnachricht,
**dadurch gekennzeichnet, dass** das Identifizieren (a) einer Primärsprache für die Nachricht ferner umfasst:
- Detektieren der Eingabe eines anfänglichen Teils der Nachricht, der vor dem in der Sekundärsprache eingegebenen Teil in die Nachricht eingegeben wird,
- Analysieren des anfänglichen Teils, um seine Sprache zu bestimmen, unter Verwendung eines gespeicherten Machine-Learning-"ML"-Modells, und
- Festlegen der bestimmten Sprache des anfänglichen Teils als die Primärsprache für die Nachricht.

2. Verfahren nach Anspruch 1, wobei das Detektieren (b) der Eingabe des Teils der Nachricht in der Sekundärsprache, die sich von der Primärsprache unterscheidet, das Analysieren des in der Sekundärsprache eingegeben Teils und das Detektieren einer Sprachänderung umfasst.

3. Verfahren nach Anspruch 2, wobei der anfängliche Teil in der Primärsprache und der Teil in der zweiten Sprache mindestens einen Satz umfassen, wobei das Verfahren das Detektieren von Begrenzungszeichen zwischen den Sätzen und das unabhängige Analysieren der Sätze umfasst.

4. Verfahren nach Anspruch 3, wobei das Analysieren eines Satzes das Analysieren mindestens eines der ersten Wörter dieses Satzes umfasst, bis die Sprache des Satzes identifiziert ist.

5. Verfahren nach einem der Ansprüche 1 bis 4, wobei das Identifizieren der Primärsprache und/oder der Sekundärsprache das Analysieren mindestens eines Kontextparameters der Nachricht umfasst.

6. Verfahren nach Anspruch 5, wobei der mindestens eine Kontextparameter ein Parameter von Folgenden ist: ein virtuelles Tastaturlayout, das durch einen Benutzer ausgewählt wird, eine vorherige Nachricht, Informationen über den Empfänger der Nachricht und Sprachpräferenzen.

7. Verfahren nach einem der Ansprüche 1 bis 6, wobei das Ersetzen (d), in der Nachricht, des in der Sekundärsprache eingegebenen Teils durch seinen übersetzten Teil in die Primärsprache automatisch nach dem Übersetzen (c) des in der Sekundärsprache eingegebenen Teils in die Primärsprache durchgeführt wird.

8. Verfahren nach einem der Ansprüche 1 bis 6, das ferner Folgendes umfasst:
- Ausgeben (c1) des in die Primärsprache übersetzten Teils zusammen mit dem in der zweiten Sprache eingegebenen Teil, und
- wobei das Ersetzen (d) nach Validierung auf dem Endgerät (1) erfolgt.

9. Verfahren nach Anspruch 8, wobei die Schritte des Übersetzens (c) des Teils in die Primärsprache und des Ausgebens (c1) des in die Primärsprache übersetzten Teils zusammen mit dem in der zweiten Sprache eingegeben Teil dynamisch aktualisiert werden, während der Teil in der zweiten Sprache eingegeben wird.

10. Mobiles Endgerät (1), das eine Verarbeitungseinheit (11) umfasst, die zu Folgendem konfiguriert ist:
- Identifizieren (a) einer Primärsprache für eine Nachricht, die an einer Benutzerschnittstelle (13) des Endgeräts (1) eingegeben werden soll;
- Detektieren (b) der Eingabe eines Teils der Nachricht in einer Sekundärsprache, die sich von der Primärsprache unterscheidet; und
- Übersetzen (c) des in einer Sekundärsprache eingegebenen Teils der Nachricht in die Primärsprache,
- Ersetzen (d), in der Nachricht, des in die Sekundärsprache eingegebenen Teils durch seinen übersetzten Teil in die Primärsprache,
**dadurch gekennzeichnet, dass** die Verarbeitungseinheit (11) ferner zu Folgendem konfiguriert ist:
- Detektieren der Eingabe eines anfänglichen Teils der Nachricht, der vor dem in der Sekundärsprache eingegebenen Teil in die Nachricht eingegeben wird,
- Analysieren des anfänglichen Teils, um seine Sprache zu bestimmen, unter Verwendung eines gespeicherten Machine-Learning-"ML"-Modells, und
- Festlegen der bestimmten Sprache des anfänglichen Teils als die Primärsprache für die Nachricht.

11. Computerprogrammprodukt, das Codeanweisungen zum Ausführen eines Verfahrens nach einem der Ansprüche 1 bis 9 zum Eingeben einer Nachricht auf einem Endgerät (1) umfasst, wenn sie von einer Verarbeitungseinheit ausgeführt werden.

12. Computerlesbares Medium, auf dem ein Computerprogrammprodukt gespeichert ist, das Codeanweisungen zum Ausführen eines Verfahrens nach einem der Ansprüche 1 bis 9 zum Eingeben einer Nachricht auf einem Endgerät (1) umfasst.

## Revendications

1. Procédé de saisie d'un message sur un terminal (1), le procédé comprenant les étapes suivantes, réalisées par une unité de traitement (11) du terminal (1) et/ou une unité de traitement d'un serveur distant (10) hébergé par un réseau (20) connecté au terminal (1) au moyen d'une unité de communication dudit terminal, ledit message étant saisi au niveau d'une interface utilisateur (13) dudit terminal (1) :
- identifiant (a) une langue primaire pour ledit message ;
- détectant (b) la saisie d'une partie dudit message dans une langue secondaire, différente de la langue primaire ; et
- traduisant (c) dans la langue primaire ladite partie saisie dans la langue secondaire,
- remplaçant (d) dans ledit message la partie saisie dans le message secondaire par sa partie traduite dans le message primaire,
**caractérisé en ce que** l'identification (a) d'une langue primaire pour ledit message comprend en outre :
- la détection de la saisie d'une partie initiale du message, saisie dans ledit message avant ladite partie saisie dans la langue secondaire,
- l'analyse de ladite partie initiale pour déterminer sa langue, à l'aide d'un modèle d'apprentissage machine « ML » mémorisé, et
- la définition de la langue déterminée de ladite partie initiale comme langue primaire pour ledit message.

2. Procédé selon la revendication 1, la détection (b) de la saisie de la partie du message dans la langue secondaire, différente de la langue primaire, comprenant l'analyse de ladite partie saisie dans la langue secondaire et la détection d'un changement de langue.

3. Procédé selon la revendication 2, ladite partie initiale dans la langue primaire et ladite partie dans la langue secondaire comprenant au moins une clause, le procédé comprenant la détection de ponctuations délimitant lesdites clauses et l'analyse indépendante desdites clauses.

4. Procédé selon la revendication 3, l'analyse d'une clause comprenant l'analyse d'au moins l'un des premiers mots de cette clause jusqu'à ce que la langue de ladite clause soit identifié.

5. Procédé selon l'une quelconque des revendications 1 à 4, l'identification de la langue primaire et/ou de la langue secondaire comprenant l'analyse d'au moins un paramètre contextuel du message.

6. Procédé selon la revendication 5, ledit au moins un paramètre contextuel étant un paramètre parmi une disposition de clavier virtuel sélectionnée par un utilisateur, un message précédent, des informations concernant le destinataire du message et des préférences linguistiques.

7. Procédé selon l'une quelconque des revendications 1 à 6, le remplacement (d), dans ledit message, de la partie saisie dans la langue secondaire par sa partie traduite dans la langue primaire étant effectué automatiquement après traduction (c) dans la langue primaire de ladite partie saisie dans la langue secondaire.

8. Procédé selon l'une quelconque des revendications 1 à 6, comprenant en outre :
- l'émission en sortie (c1) de la partie traduite dans la langue primaire avec la partie saisie dans la seconde langue, et
- ledit remplacement (d) s'effectuant lors de la validation sur le terminal (1).

9. Procédé selon la revendication 8, les étapes de traduction (c) de ladite partie dans la langue primaire et l'émission en sortie (c1) de la partie traduite dans la langue primaire avec la partie saisie dans la seconde langue étant mises à jour dynamiquement pendant que ladite partie est saisie dans la seconde langue.

10. Terminal mobile (1) comprenant une unité de traitement (11) configurée pour :
- identifier (a) une langue primaire pour un message à saisir au niveau d'une interface utilisateur (13) du terminal (1) ;
- détecter (b) la saisie d'une partie dudit message dans une langue secondaire, différente de la langue primaire ; et
- traduire (c) dans la langue primaire ladite partie du message saisie dans une langue secondaire,
- remplacer (d) dans ledit message la partie saisie dans la langue secondaire par sa partie traduite dans la langue primaire,
**caractérisé en ce que** l'unité (11) de traitement est en outre configurée pour :
- détecter la saisie d'une partie initiale du message, saisie dans ledit message avant ladite partie saisie dans la langue secondaire,
- analyser ladite partie initiale pour déterminer sa langue, à l'aide d'un modèle d'apprentissage machine « ML » mémorisé, et
- définir la langue déterminée de ladite partie initiale comme langue primaire pour ledit message.

11. Produit de programme informatique, comportant des instructions en code servant à exécuter un procédé selon l'une quelconque des revendications 1 à 9 pour saisir un message sur un terminal (1), lorsqu'elles sont exécutées par une unité de traitement.

12. Support lisible par ordinateur, sur lequel est stocké un produit de programme informatique comprenant des instructions de code pour exécuter un procédé selon l'une quelconque des revendications 1 à 9 pour saisir un message sur un terminal (1).
